# EUROPEAN PATENT SPECIFICATION

(11) **EP 0 732 817 B1**
(45) Date of publication and mention of the grant of the patent: **11.01.2006**
(21) Application number: 96850043.9
(22) Date of filing: 07.03.1996
(51) Int. Cl.: H04B 7/26, H04J 3/06

(54) **Procedure for radio synchronization of time shared systems**
Verfahren zur Funksynchronisation in zeitverschachtelten Anordnungen
Procédé de synchronisation radio dans des systèmes à multiplexage temporel

(30) Priority: 15.03.1995 SE 9500913
(43) Date of publication of application: 18.09.1996
(73) Proprietor: TELIA AB, 123 86 Farsta (SE)
(72) Inventor: Olanders, Peter, S-234 33 Lomma (SE); Zanichelli, Margareta, S-216 19 Malmö (SE)
(74) Representative: Karlsson, Leif Karl Gunnar

(56) References cited:
- EP-A- 0 592 209
- WO-A-94/18764
- US-A- 5 285 443

## Description

### FIELD OF THE INVENTION

The present invention relates to a procedure for radio synchronization of time shared systems, especially DECT (Digital European Cordless Telecommunications). This is a wholly time-shared system with timesharing in both access (TDMA = Time Divisional Multiple Access) and duplex (TDD = Time Division Duplex). For a more complete description of DECT, see DECT Interface (ETS 300 175). DECT is by that to a great extent depending on time precision, which has resulted in that strong efforts have been devoted to the study and handling of, for instance, time dispersion and time delay.

Also the capacity in DECT becomes depending on the time precision, both internally within a system and externally in contact with other DECT-systems. The capacity is to a great extent depending on synchronization, also that synchronization which exists between two or more geographically nearby situated DECT-systems. The capacity calculations which have been made show that with systems which are not synchronized with each other the capacity can decrease with up to 50% of the maximally possible.

Synchronization of in other respects independent DECT-systems can by that considerably increase the common local capacity.

### PRIOR ART

In the specification of DECT it is indicated that it is possible to via cable synchronize nearby situated fixed units in DECT-systems if these are equipped with a so called synchronization port. Synchronization via cable, which might have been regarded as the most natural, must be regarded as highly unrealistic to perform generally, since it implies extra cabling, which furthermore in public applications should need to be performed between competing operators. This method for synchronization via cable also has technical disadvantages, for instance is the propagation time delay highly noticeable, which requires extra high demands on how the cabling is performed. Further, compensation in the units for this propagation time is required. Synchronization via cable can be said to give global synchronization, which does not guarantee local synchronization.

Within the patent literature a number of documents which describes different methods to solve similar problems are published:

EP 626 796 shows a wireless communications system which consists of a number of cells or base stations. The invention relates to a method to synchronize the base stations with each other. The synchronization is performed in such a way that a base station transmits synchronization information with which a neighbour station can synchronize. These stations establish a master/slave relationship and proceed synchronizing themselves with other stations in the system. The in this way established synchronization is maintained by means of communication lines, i.e. fixed communication lines. The wireless synchronization is also possible between different wireless systems.

U.S. 5 285 443 describes a method and a device to synchronize TDD-systems. According to the method a time signal is transmitted wirelessly, at which for instance a base station can extract this to obtain synchronization with the signal. The synchronization signal is transmitted from a base station which is called master and is received by the other slave stations in the coverage area of the master.

EP 414 409 relates to synchronization of wireless telephone systems which utilize "burst mode duplex". Synchronization is maintained by the base stations being equipped with means for listening in to the communication on other base stations and calculate the relative phase between the time slots.

WO 94/18764 relates to a communications system consisting of a number of base units and portable units. The system utilizes TDD. The base stations have possibility to synchronize the transmission between themselves by one of the base stations being appointed as master. This base station transmits a signal which is used by the other base stations to synchronize with the master unit. The mentioned synchronization signal is transmitted from the master via radio and is extracted from a signal which is distributed via wire.

EP 592 209 describes a method to establish synchronization between base stations in a mobile radio system. The base stations are autonomous as far as they are not dependent of external control to establish mentioned synchronization.

WO 94/10768 relates to an arrangement to obtain synchronization in a mobile telecommunications system. The arrangement includes a central cordination unit to transmit synchronization information to the base stations.

U.S. 4 135 059 describes a TDMA-system which allows communication between two different groups by maintaining synchronization between the groups.

U.S. 5 363 376 relates to a method and a device for synchronization in a wireless communications system.

The technical problem which the invention intends to solve is to achieve synchronization between independent time shared wireless telecommunications systems in such a way that they will become locally synchronized with each other, and this preferably without breaking against or requiring extensive changes in existent systems.

### CONCLUSION OF THE INVENTION

The invention solves the problems above by providing a procedure for radio synchronization of time shared wireless telecommuncations systems which includes at least two in other respects independent systems with each at least one fixed control unit and respective portable units.

According to the invention a first system will establish itself as a master system, whereas the other systems start as slave systems and via radio listen in to the master system and synchronize themselves with the master system.

Preferably slave systems listen in to the master system during a certain period of time, for instance corresponding to 100 time frames.

The synchronization further can be repeated periodically, with fixed time interval or after a time interval which can be adjusted adaptively.

The invention is described in more details in the enclosed patent claims.

### SHORT DESCRIPTIONS OF THE DRAWINGS

The invention will now be described in details with reference to the enclosed drawings, of which
Figure 1 is a flow chart over the method according to the invention, and
Figure 2 illustrates the time structure in DECT.

### DETAILED DESCRIPTION OF THE INVENTION

The invention is based on independent DECT-systems being synchronized via radio, i.e. a system listens in to the radio communication of another system (or parts of it) and synchronize its own clock with that of the system listened in to.

A DECT-system includes a fixed control unit FP (Fixed Part) and portable units PP (Portable Parts). The FP in the DECT-system which is first establised within a local area will here operate as master. The other nearby situated DECT-systems shall be synchronized with this. The master/slave relationship is quite simply decided by all units initially (at swithing on, or start of the system) taking "slave"-position, (i.e. scan the neighbourhood for other, synchronized systems). After the system has become synchronized with another system, the system can take on a master role. In this way all systems become equal, resulting in that no special production or manufacturing of master systems is needed.

The systems also can get an automatic "classification" making the first established system on a geographical place master for all new introduced systems, making only these latter resynchronizing (see below).

The synchronization procedure also can be recurrently performed, if so desired periodically, in a way that the systems do not get out of synchronization with each other. This can be performed at a point of time when there is no traffic in the system, or there has not been any during a certain period of time, when the system can be reset to slave position. The synchronization procedure itself will take fractions of a second, and is comparatively seldom occurrent; the traffic reduction is, accordingly, in most cases quite unnoticeable.

There is an extremely small risk that the synchronized systems at that should be set in slave position at the same time, at which the synchronization of the systems might start self-oscillating. This risk can be further reduced by the point of time for resynchronization is based on the time when the system was started. ,

Another alternative should be to mark slave position by transmission of a certain pattern in DECT's time-frequency slot pattern.

The time between the recurrent synchronizations can be an adjustable parameter, or even be adjusted adaptively in a way that makes the systems better and better synchronized with each other by the time.

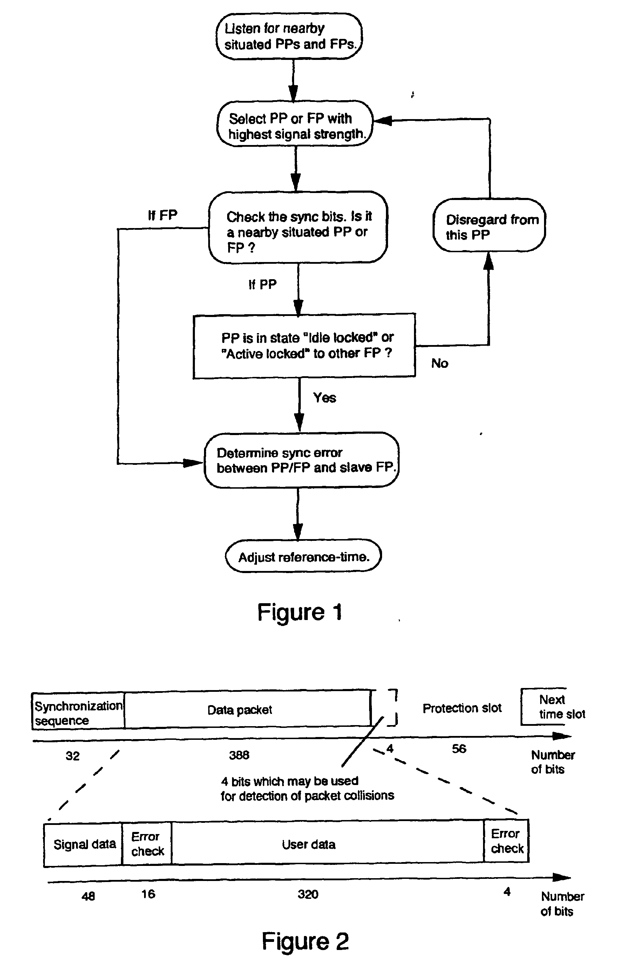

The synchronization method according to the invention is shown in Figure 1. The fixed unit FP which shall be synchronized listens during a certain time in to nearby situated fixed FP- and portable PP-units. The signal strength from the FPs and PPs listen in to are measured according to DECT Common Interface (ETS 300 175, part 2, §8.3). The units listened in to are compared and listed in order by signal strength (according to procedure for PP in ETS300 175, part 2, §9.2). Only those which have the strongest signal strenght shall be used, as it is with these it is most important to be synchronized. Whether signal listened in to comes from a nearby situated PP or FP can be gathered from the sync bits (the sync bits from a PP are inverted compared with those of the FP). In the case when the highest signal strenght is obtained from a PP, it is checked that this on this occasion is synchronized with any other FP (i.e. is in state Idle-locked or Active-locked to another FP, see ETS300 175, part 3, §4.3.1). Only when that is the case this can be used as a reference.

Listening can be performed during a comparatively long time, as most 1 s, which corresponds to 100 time frames in DECT. Normally synchronization is expected to be performed within less than 10 time frames. A portable is expected to move with a speed of about 1,5 m/s, which corresponds to normal walking speed. Even if a portable listened in to is moving away from the FP, it consequently will not have time to move out of the coverage area of the FP before the listening and the comparison of nearby situated units are finished.

The deviation of the synchronization is determined between the reference which has been selected and the internal clock in the FP which shall be synchronized. Its reference time is adjusted according to the procedure which is described in the standard DECT Common Interface (ETS 300 175, part 2, §8.5), where the synchronization between an FP and a PP is described), by which the synchronization is performed.

In all synchronization it is necessary to have access to a clock of sufficiently high accuracy for the purpose. There are a number of different methods to extract some type of clock.

The natural choice is to make use of the in the FP built-in clock (the frequency oscillator). According to DECT Common Interface (ETS 300 175, part 2, §4.2.2) each FP and PP shall be equipped with internal clock. The accuracy and stability requirement is for the clock of the FP 10 ppm, and for that of the PP 25 ppm.

Even if the built-in clock should n6t be directly accessible it is however possible to make use of the built-in time structure in DECT. In Figure 2 is shown the content of a DECT time slot. Each frame contains 24 time slots. It is evident that such a slot contains 480 bits, which with the frame time of DECT (10 ms) gives 1 bit/1 µs. Consequently 1 µs is easily extractable from the time cycle of the DECT. It is in the nature of things that it is sufficient with this accuracy (1 bit) since it at the same time is the smallest unit by which synchronization can be performed.

The access of external clock pulses can be said to constitute a third method. Such clock pulses are accessible from many of the digital systems to which DECT-systems can be connected (PCM, ISDN, digital PABX etc).

DECT-systems with digital interface can use the digital frequency normal as the carrying part in the synchronization itself, making the adjustment performed by the use of this frequency normal. In this connection it can be important to point out that direct synchronization with this frequency normal does not guarantee local synchronization, or synchronization with for instance DECT-system with analog interface.

The present invention consequently provides a method for radio synchronization of time-shared systems, especially DECT-systems, with a number of advantageous qualities:

The synchronization is wholly radio based. The synchronization also can be performed in relation to mobile units, i.e. portables. Local synchronization can be obtained between independent systems, which can increase the capacaity by up to 60% according to simulations. The method can be introduced in existing systems without larger costs or problems and never results in reduced performance. Equipment which utilizes the synchronization method according to the invention works together with equipment which is lacking this function. Synchronization furthermore can be performed in relation to equipment which is lacking the function here described.

The method according to the invention can be utilized within all the applications fields of DECT, accordingly company, public, private and local networks. The invention is only restricted by the following patent claims.

## Claims

1. Procedure for radio synchronization of DECT-systems including at least two in other respects independent DECT-systems with each at least one fixed control unit (FP) and respective portable units (PP), wherein a first system within a local area establishes itself as master system, whereas the other systems starts as slave systems, listen via radio in to the master system and synchronize themselves with the master system, **characterized in that** the synchronization comprises the steps:
a) said slave systems listen for nearby situated fixed units (FP) and portable units (PP);
b) said slave systems selects said fixed unit (FP) or portable unit (PP) with the highest signal strength:
c) said slave systems checks sync bits to decide whether it is a fixed unit (FP) or a portable unit (PP) with the highest signal strength;
d) if a fixed unit (FP) has the highest signal strength, to determine the sync error between said fixed unit (FP) and said slave system, whereby said slave system being synchronized with said fixed unit (FP);
e) if a portable unit (PP) has the highest signal strength, to check that this on this occasion is synchronized with any other fixed unit (FP);
f) if said portable unit (PP) is synchronized according to step e), to determine the sync error between said portable unit (PP) and said slave system, whereby said slave system being synchronized with said portable unit (PP);
g) if said portable unit (PP) is not synchronized according to step e) to disregard from said portable unit (PP) and the steps b), c), d), e), f), and g) is repeated an arbitrary number of times until said slave system being synchronized with a fixed unit (FP) or a portable unit (PP).

2. Procedure according to claim 1, **characterized in that** slave systems listen in to the master system during a certain period of time, for instance corresponding to 100 time frames.

3. Procedure according to claim 1 or 2, **characterized in that** the synchronization is repeated periodically.

4. Procedure according to claim 1 or 2, **characterized in that** the synchronization is repeated with a time interval which is repeated adaptively.

5. Procedure according to claim 1 - 2, **characterized in that** a slave system is set in master position after it has been synchronized.

6. Procedure according to claim 3 or 4, **characterized in that** the systems are classified in such a way that the system which is first established becomes master system for all new, added systems, at which the synchronization is repeated only for the new, added systems.

7. Procedure according to any of the previous claims, **characterized in that** the fixed control unit of the slave system listens in to nearby situated fixed control units and portable units.

8. Procedure according to any of the previous claims, **characterized in that** the synchronization is performed in relation to the built-in clock of the fixed control unit.

9. Procedure according to any of the claims 1 - 7, **characterized in that** the synchronization is performed in relation to the built-in time structure of the time shared system.

10. Procedure according to any of the claims 1 - 7, **characterized in that** the synchronization is performed in relation to an external clock, for instance towards a connected digital network or a digital PABX.

## Patentansprüche

1. Verfahren zur Funksynchronisation von DECT-Systemen mit wenigstens zwei in anderer Hinsicht unabhängigen DECT-Systemen mit jeweils wenigstens einer festen Steuereinheit (FP) und jeweils tragbaren Einheiten (PP), wobei ein erstes System innerhalb eines lokalen Bereiches sich selbst als ein Master-System einrichtet, während die anderen Systeme als Slave-Systeme starten, über Funk auf das Master-System hören und sich selbst mit dem Master-System synchronisieren, **dadurch gekennzeichnet, dass** die Synchronisation die Schritte aufweist:
a) dass die Slave-Systeme auf nahe liegende feste Einheiten (FP) und tragbare Einheiten (PP) hören;
b) dass die Slave-Systeme die feste Einheit (FP) oder tragbare Einheit (PP) mit der höchsten Signalstärke wählen;
c) dass die Slave-Systeme die Sync-Bits überprüfen, um zu entscheiden, ob es eine feste Einheit (FP) oder eine tragbare Einheit (PP) ist, die die höchste Signalstärke hat;
d) wenn die feste Einheit (FP) die höchste Signalstärke hat, Bestimmen des Sync-Fehlers zwischen der festen Einheit (FP) und dem Slave-System, wodurch das Slave-System mit der festen Einheit (FP) synchronisiert wird;
e) wenn eine tragbare Einheit (PP) die höchste Signalstärke hat, Überprüfen, dass diese bei dieser Gelegenheit mit irgendeiner anderen festen Einheit (FP) synchronisiert ist;
f) wenn die tragbare Einheit (PP) gemäß dem Schritt e) synchronisiert ist, Bestimmen des Synchronisationsfehlers zwischen der tragbaren Einheit (PP) und dem Slave-System, wodurch das Slave-System mit der tragbaren Einheit (PP) synchronisiert wird;
g) wenn die tragbare Einheit (PP) nicht gemäß Schritt e) synchronisiert ist, die tragbare Einheit (PP) unberücksichtigt lassen und die Schritte b), c), d), e), f) und g) eine beliebige Anzahl von Malen solange wiederholen bis das Slave-System mit einer festen Einheit (FP) oder einer tragbaren Einheit (PP) synchronisiert ist.

2. Verfahren nach Anspruch 1, **dadurch gekennzeichnet, dass** die Slave-Systeme während einer gewissen Zeitperiode, beispielsweise entsprechend 100-fachen Rahmen auf das Master-System hören.

3. Verfahren nach Anspruch 1 oder 2, **dadurch gekennzeichnet, dass** die Synchronisation periodisch wiederholt wird.

4. Verfahren nach Anspruch 1 oder 2, **dadurch gekennzeichnet, dass** die Synchronisation mit einem Zeitintervall, das adaptiv wiederholt wird, wiederholt wird.

5. Verfahren nach Anspruch 1- 2, **dadurch gekennzeichnet, dass** ein Slave-System in eine Master-Position gesetzt wird, nachdem es synchronisiert worden ist.

6. Verfahren nach Anspruch 3 oder 4, **dadurch gekennzeichnet, dass** die Systeme so klassifiziert sind, dass das System, welches zuerst errichtet ist, das Master-System für alle neuen, hinzugefügten Systeme wird, wobei die Synchronisation nur für die neuen, hinzugefügten Systeme wiederholt wird.

7. Verfahren nach einem der vorstehenden Ansprüche, **dadurch gekennzeichnet, dass** die feste Steuereinheit des Slave-Systems in nahe gelegene feste Steuereinheiten und tragbare Steuereinheiten hört.

8. Verfahren nach einem der vorstehenden Ansprüche, **dadurch gekennzeichnet, dass** die Synchronisation in Relation zu dem eingebauten Takt der festen Steuereinheit durchgeführt wird.

9. Verfahren nach einem der Ansprüche 1 bis 7, **dadurch gekennzeichnet, dass** die Synchronisation in Relation zu der eingebauten Zeitstruktur des gemeinsam verwendeten Zeitsystems durchgeführt wird.

10. Verfahren nach einem der Ansprüche 1 bis 7, **dadurch gekennzeichnet, dass** die Synchronisation in Relation zu einem externen Takt durchgeführt wird, beispielsweise auf ein angeschlossenes digitales Netzwerk oder einen digitalen PABX gerichtet.

## Revendications

1. Procédé pour la synchronisation radio de systèmes DECT comprenant au moins deux systèmes DECT indépendants dans les autres aspects, ayant chacun au moins une unité de commande fixe (FP) et des unités portables respectives (PP), dans lequel un premier système à l'intérieur d'une zone locale s'établit comme système maître tandis que les autres systèmes démarrent comme systèmes esclaves, écoutent par radio le système maître et se synchronisent avec le système maître,
**caractérisé en ce que** la synchronisation comprend les étapes suivantes :
(a) les dits systèmes esclaves écoutent les unités fixes (FP) et les unités portables (PP) situées à proximité ;
(b) les dits systèmes esclaves sélectionnent la dite unité fixe (FP) ou la dite unité portable (PP) ayant l'intensité de signal la plus élevée ;
(c) les dits systèmes esclaves vérifient les bits de synchronisation pour décider si c'est une unité fixe (FP) ou une unité portable (PP) ayant l'intensité de signal la plus élevée ;
(d) si une unité fixe (FP) a l'intensité de signal la plus élevée, on détermine l'erreur de synchronisation entre la dite unité fixe (FP) et le dit système esclave, de sorte que le dit système esclave est synchronisé avec la dite unité fixe (FP) ;
(e) si une unité portable (PP) a l'intensité de signal la plus élevée, on vérifie que cette unité, à cette occasion, est synchronisée avec une autre unité fixe (FP) ;
(f) si la dite unité portable (PP) est synchronisée conformément à l'étape (e), on détermine l'erreur de synchronisation entre la dite unité portable (PP) et le dit système esclave, de sorte que le dit système esclave est synchronisé avec la dite unité portable (PP) ;
(g) si la dite unité portable (PP) n'est pas synchronisée conformément à l'étape (e), on ne tient pas compte de la dite unité portable (PP) et on répète les étapes (b), (c), (d), (e), (f) et (g) un nombre arbitraire de fois jusqu'à ce que le dit système esclave soit synchronisé avec une unité fixe (FP) ou une unité portable (PP).

2. Procédé selon la revendication 1, **caractérisé en ce que** les systèmes esclaves écoutent le système maître pendant un certain temps, par exemple correspondant à 100 tranches de temps.

3. Procédé selon la revendication 1 ou 2, **caractérisé en ce que** la synchronisation est répétée périodiquement.

4. Procédé selon la revendication 1 ou 2, **caractérisé en ce que** la synchronisation est répétée avec un intervalle de temps qui est répété de façon adaptative.

5. Procédé selon la revendication 1 ou 2, **caractérisé en ce qu'**un système esclave est établi en position de maître après qu'il ait été synchronisé.

6. Procédé selon la revendication 3 ou 4, **caractérisé en ce que** les systèmes sont classifiés d'une manière telle que le système qui est établi en premier devienne un système maître pour tous les nouveaux systèmes ajoutés, de sorte que la synchronisation est répétée seulement pour les nouveaux systèmes ajoutés.

7. Procédé selon une quelconque des revendications précédentes, **caractérisé en ce que** l'unité de commande fixe du système esclave écoute les unités de commande fixes situées à proximité et les unités portables.

8. Procédé selon une quelconque des revendications précédentes, **caractérisé en ce que** la synchronisation est effectuée en relation à l'horloge incorporée de l'unité de commande fixe.

9. Procédé selon une quelconque des revendications 1 à 7, **caractérisé en ce que** la synchronisation est effectuée en relation à la structure de temps incorporée du système de temps partagé.

10. Procédé selon une quelconque des revendications 1 à 7, **caractérisé en ce que** la synchronisation est effectuée en relation à une horloge externe, par exemple vers un réseau numérique connecté ou un PABX numérique.
